# EUROPEAN PATENT SPECIFICATION

(11) **EP 0 997 078 B1**
(45) Date of publication and mention of the grant of the patent: **11.02.2004**
(21) Application number: 99203491.8
(22) Date of filing: 25.10.1999
(51) Int. Cl.: A23L 1/16

(54) **Pasta enriched with vegetable proteins**
Mit Pflanzenproteinen angereicherte Teigwaren
Pâtes alimentaires enrichies en protéines végétales

(30) Priority: 28.10.1998 IT MI982309
(43) Date of publication of application: 03.05.2000
(73) Proprietor: Duranti, Marcello, 20133 Milano (IT)
(72) Inventor: Duranti, Marcello, 20133 Milano (IT)
(74) Representative: Long, Giorgio

(56) References cited:
- EP-A- 0 412 639
- WO-A-99/11143
- WO-A-99/51106
- CA-A- 2 095 959
- US-A- 3 949 101
- US-A- 4 000 330

## Description

In general, the present invention relates to pasta enriched with vegetable proteins, that is, pasta having a protein content greater than that of conventional pasta made from wheat flour (semolina).

In particular, the present invention relates to pasta of the above-mentioned type having a protein content and an essential amino-acids composition comparable to those of meat or eggs so as to be characterized by a high nutritional value.

It is known that, from a nutritional point of view, conventional pasta produced from wheat flour is lacking in proteins both qualitatively and quantitatively when compared with other foods with higher protein contents such as meat or eggs.

The protein content of semolina is in fact no greater than 12% by weight, whereas that of the foods mentioned above is generally within the range of 13-20% by weight, relative to the weight of the moist product.

Moreover, conventional semolina pasta is lacking in some amino-acids which are essential nutrients for man, amongst which in particular is lysine whereas, conversely, it is rich in amino-acids containing sulphur.

On the other hand, it is known that the seeds of leguminous plants are very rich in proteins (up to 40% by weight) and have amino-acid compositions complementary to those of cereal grains, that is, they are rich in lysine and poor in amino-acids containing sulphur.

In the Mediterranean diet, cereal and leguminous protein sources are conventionally combined in first courses such as pasta and beans, pasta and chick peas, rice and peas, etc., which provide a satisfactory supply of proteins from the nutritional point of view.

However, the preparation of the above-mentioned first courses is often laborious and takes a fairly long time which is not always available to the consumer.

For this reason, in the last few decades, various investigations have been carried out to try to combine cereal and leguminous protein sources in a single fast-food product such as pasta.

From an industrial point of view, the result of these investigations has led to the creation and production of some vegetable-protein enriched pastas made from dough comprising semolina and predetermined quantities of legume flours produced by grinding pulses.

However, although these pastas have a high nutritional value, they have the serious disadvantage of having poor organoleptic and structural characteristics when compared with those of pasta made from semolina alone.

In particular, the consistency of the above-mentioned enriched pastas after cooking is decidedly unsatisfactory in comparison with that of conventional semolina pasta. US 4 000 330 discloses the enrichment of semolina with soy protein.

The technical problem upon which the present invention is based is that of providing pasta enriched with vegetable proteins of high nutritional value which retains all of the organoleptic and structural characteristics of conventional semolina pasta so as to overcome the disadvantages mentioned above with reference to the enriched pastas of the prior art.

This problem is solved by pasta based on semolina enriched with vegetable proteins and characterized in that it comprises at least one legume protein concentrate and/or isolate.

The terms "protein concentrate" and "protein isolate" are intended to define herein substances constituted mainly by proteins extracted from seeds of leguminous plants by conventional preparation methods comprising the steps of extraction, purification and drying of the proteins.

Protein concentrates generally have a protein content of 55-80% by weight relative to the weight of the dried substance and are produced by methods in which the extraction of the proteins is performed at acid pH values.

Protein isolates, however, may even reach a protein content of 90-95% by weight relative to the weight of the dried substance, since the methods of preparation of these isolates generally provide for extraction of the legume proteins at basic pH values at which most of these proteins have maximum solubility whereas, at the same time, the polysaccharide components of the fibrous structures of the seeds can be removed as insoluble material.

The pasta according to the invention may comprise protein concentrates and/or isolates of various legumes such as soya, lupins, peas, beans, chick-peas, etc.

In the pasta according to the invention, lupin protein concentrates and/or isolates are preferred because of their high protein content.

The pasta according to the invention is produced by normal methods for the preparation of conventional pasta, starting with a dough comprising semolina and a preselected legume protein concentrate and/or isolate in predetermined proportions.

It has been found that starting doughs comprising semolina and a legume protein concentrate and/or isolate, particularly a lupin protein concentrate and/or isolate, produce pasta enriched with vegetable proteins which has a high nutritional value and which retains all of the organoleptic and structural characteristics of conventional pasta made from semolina alone.

In particular, the pasta according to the invention produced in the above-mentioned manner advantageously has a protein content and an essential amino-acids composition comparable to those of protein foods with high nutritional value such as meats or eggs.

The quantity of legume protein concentrate and/or isolate in the dough for the preparation of the pasta according to the invention may vary within the range of 8-25% by weight relative to the weight of semolina.

The quantity legume protein concentrate and/or isolate present in the dough is preferably within the range of 10-20% by weight relative to the weight of semolina.

A quantity of legume protein concentrate and/or isolate of 14-16% by weight relative to the weight of semolina is particularly preferred.

According to a particularly preferred method of implementing the invention, the dough for the preparation of the pasta enriched with vegetable proteins comprises a lupin protein concentrate and/or isolate in the percentages by weight indicated above.

From a technological point of view, it is also possible to prepare pasta enriched with vegetable proteins from dough in which the quantity of legume protein concentrate and/or isolate is outside the above-mentioned range of 8-25%.

However, a content of less than 8% by weight of legume protein isolate and/or concentrate in the dough does not lead to an appreciable improvement in the nutritional value of the final pasta since it will have an amino-acids content which is not significantly greater than that of conventional semolina pasta.

On the other hand, a content greater than 25% of legume protein isolate and/or concentrate added to the dough leads to the production of pasta which has a high protein content but in which there is a gradual worsening of the organoleptic and structural characteristics as the above-mentioned content increases, and in which the content of sulphuriferous amino-acids in turn becomes inadequate from a nutritional point of view.

The characteristics and the advantages of the invention will become clearer from the following description of an example of the preparation of a lupin protein concentrate and a lupin protein isolate, and from the description of an example of the preparation of pasta according to the invention comprising the lupin concentrate or isolate, the descriptions being given by way of non-limiting indication.

### EXAMPLE 1

### Preparation of a lupin protein isolate.

A lupin protein isolate was prepared by the following conventional method.

Dry lupin seeds were ground by a blender to produce a homogeneous flour with a particle size within the range of 250-300 microns.

The flour was then subjected to partial delipidation by adding cold pentane to it, stirring the mixture for about 30 minutes so as to dissolve the lipids, and removing the resulting solution containing the dissolved lipids after allowing the flour to settle.

The above-mentioned steps were performed in sequence three times.

The lupin proteins were then extracted from the partially delipidized and carefully dried flour and were constituted mainly by two fractions, albumins (about 12%) and globulins (about 87%), both soluble at basic pH.

The extraction was performed by the addition of water to the flour with a flour:water ratio of 1:5 w/v, to give a suspension which was brought to pH 8.0 with 5M NaOH and was stirred for 3-4 hours at ambient temperature to dissolve the proteins.

The insoluble material was then separated from the basic solution containing the proteins by centrifuging for 30 minutes at 3000 revolutions/minute and the majority lupin proteins (globulins) were precipitated at their isoelectric point by bringing the pH of the solution to 4.5 with 5M HCl.

The precipitate was then recovered by centrifuging for 30 minutes at 3000 revolutions/minute, frozen to -20°C and lyophilized.

A lupin protein isolate which had a protein content of about 70% by weight, determined by conventional analytical methods, was thus obtained.

In order to satisfy further and contingent requirements, an expert in the art may apply many modifications and variations to the above-described method; for example, he could optimize some parameters such as the particle size of the flour, the delipidation method, the flour/water ratio used in the dissolving of the proteins, etc., so as to produce a lupin isolate having a higher protein content without, however, departing from the scope of protection of the present invention.

### EXAMPLE 2

### Preparation of a lupin protein concentrate.

A lupin protein concentrate was prepared by the following conventional method.

Dry lupin seeds were ground by a blender to give a homogeneous flour with a particle size within the range of 250-300 microns.

The flour was partially delipidized by the method described above for the preparation of the lupin protein isolate of Example 1 and was dried carefully.

Water was then added to the partially delipidized dry flour with a flour:water ratio of 1:5 w/v and the resulting suspension was brought to pH 4.5 with 6M HCl and was stirred for 3-4 hours at ambient temperature.

The insoluble material containing the proteins was then separated from the acid solution by centrifuging for 30 minutes at 3000 revolutions/minute.

The precipitate was then recovered by centrifuging for 30 minutes at 3000 revolutions/minute, frozen to -20°C and lyophilized.

A lupin protein concentrate which was found to have a protein content of about 55% by weight, determined by conventional analytical methods, was thus obtained.

### EXAMPLE 3

### Preparation of pasta containing a lupin protein concentrate and/or isolate.

Various samples of pasta according to the invention were prepared by a wholly conventional method starting with respective doughs comprising semolina, 30% by weight of water relative to the weight of the semolina, and a predetermined quantity of a lupin protein concentrate or isolate.

Each dough was compressed and extruded in conventional manner so as to produce a sample of spaghetti which had a moisture content of about 30%.

Each spaghetti sample was then dried to a moisture content of 12.5% by wholly conventional high-temperature treatment.

The following spaghetti samples containing a lupin protein concentrate or isolate in the percentages by weight indicated relative to the weight of semolina were prepared in accordance with the method described above:
1) spaghetti containing 10% of the protein isolate of Example 1;
2) spaghetti containing 15% of the protein isolate of Example 1;
3) spaghetti containing 20% of the protein isolate of Example 1;
4) spaghetti containing 15% of the protein concentrate of Example 2.

A sample of spaghetti containing a quantity of 30% by weight of lupin flour relative to the weight of semolina and a sample of semolina spaghetti were also prepared by the method described above, as controls.

All of the above-mentioned spaghetti samples were subjected to protein-content analysis.

Spaghetti samples 1) to 3), the spaghetti sample containing lupin flour, and the semolina spaghetti sample were also subjected to analysis of their amino-acids compositions.

The results of these analyses are given in Tables 1 and 2, respectively.

**TABLE 1**

| Analysis of total nitrogen in the pasta samples (g/100 g of product) | | |
|---|---|---|
| SAMPLES | Proteins (N x 5.8) | Coefficient of variation (*) (%) |
| Spaghetti made from semolina (100%) | 11.84 | 1.44 |
| Spaghetti containing 30% of lupin flour | 18.04 | 1.94 |
| Spaghetti containing 10% of lupin protein isolate | 17.32 | 0.27 |
| Spaghetti containing 15% of lupin protein isolate | 21.08 | 0.42 |
| Spaghetti containing 20% of lupin protein isolate | 24.83 | 0.31 |
| Spaghetti containing 15% of lupin protein concentrate | 18.31 | 0.28 |

| | | |
|---|---|---|
| (*) calculated as the percentage ratio between the standard deviation and the mean of the determinations performed. | | |

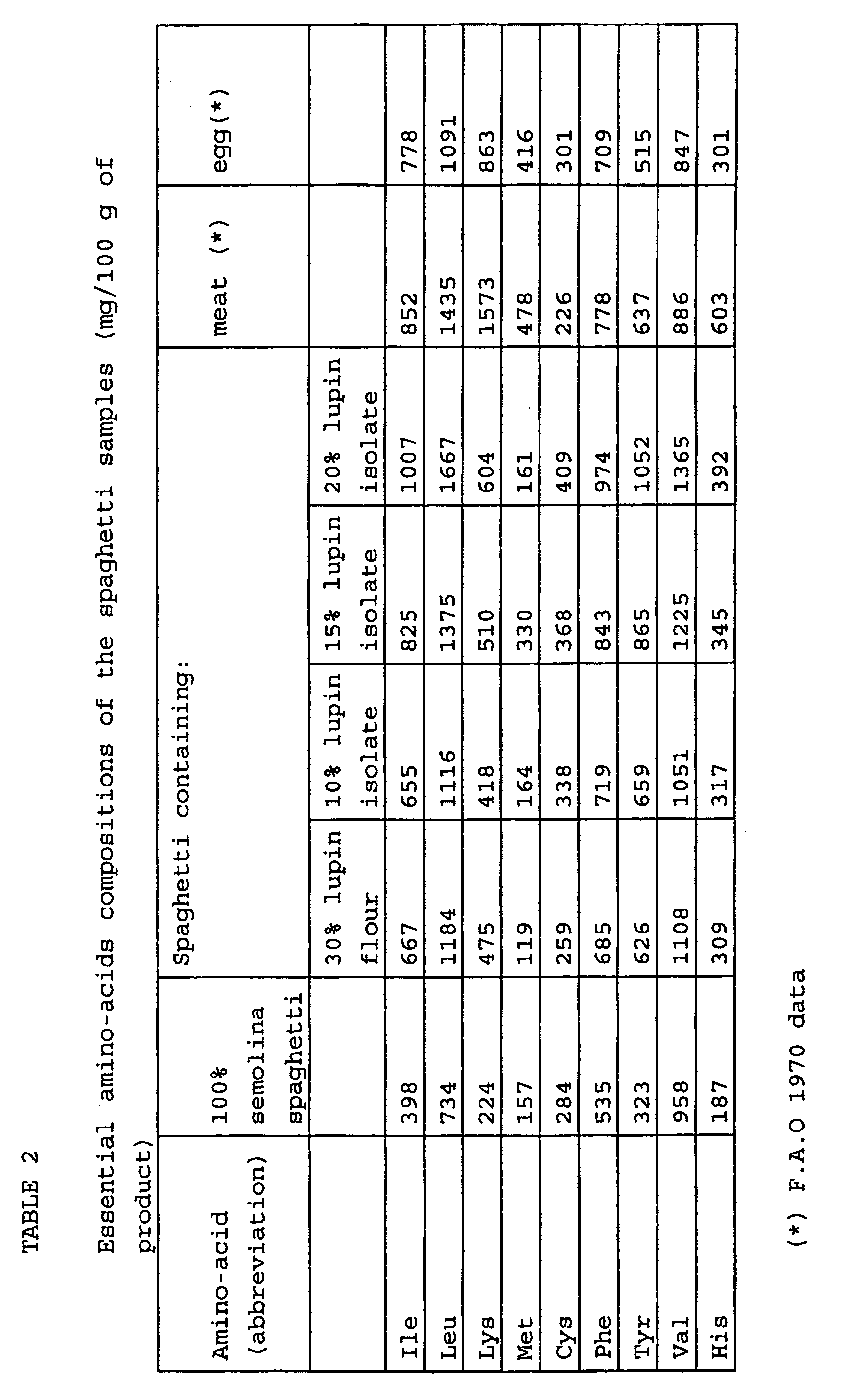

Table 1 shows that the overall protein content, expressed as N x 5.8, of the samples of spaghetti according to the invention is decidedly greater than that of semolina spaghetti and is comparable to that of meat (about 18-20%).

In particular, the spaghetti samples containing 10% and 20% of lupin protein isolate were found to have protein contents slightly greater and slightly less, respectively, than the average protein content of meat, to which the spaghetti samples containing 15% of lupin protein isolate or 15% of lupin protein concentrate were closest.

All of the above-mentioned samples of spaghetti according to the invention were thus of high nutritional value in terms of protein content.

Table 1 also shows that the spaghetti sample containing 30% of lupin flour had a protein content comparable to that of the sample of spaghetti according to the invention containing 10% of lupin protein isolate.

However, as will be seen from the following, the spaghetti sample containing lupin flour showed poor organoleptic and structural characteristics after cooking.

Table 2 shows that the amino-acid profiles of the samples of spaghetti according to the invention were considerably improved with regard to essential amino-acids in comparison with that of semolina spaghetti, as a result of the addition of a lupin protein concentrate or isolate to the dough.

In particular, the amino-acid profiles of the samples of spaghetti according to the invention were wholly comparable to the essential amino-acids provided by eggs which are considered by nutritionists to be those of optimal biological value.

### COOKING TESTS

In this example, the behaviour upon cooking of the samples of spaghetti according to the invention and of the control samples, prepared in accordance with Example 3, were compared.

Each spaghetti sample, which had an overall weight of about 150 g, was cooked for 11 minutes in an excess of boiling water containing 3% of dissolved salt.

After cooking, the spaghetti samples were drained and their organoleptic characteristics in terms of hardness (consistency after cooking) and flavour were assessed by a sample (panel) of expert tasters.

The results obtained are given in Table 3 below.

**TABLE 3**

| SAMPLES | Hardness | Flavour | Overall opinion |
|---|---|---|---|
| Spaghetti made from semolina (100%) | 3 | 3.7 | 3.4 |
| Spaghetti containing 30% of lupin flour | 2.6 | 2.8 | 2.7 |
| Spaghetti containing 10% of lupin protein isolate | 3.3 | 3.7 | 3.4 |
| Spaghetti containing 15% of lupin protein isolate | 3.6 | 3.7 | 3.6 |
| Spaghetti containing 20% of lupin protein isolate | 3.8 | 3.3 | 3.3 |
| Spaghetti containing 15% of lupin protein concentrate | z2.9 | 3.4 | 3.2 |

The assessment criteria were as follows:

### HARDNESS

1 = very soft; 2 = soft; 3 = quite hard; 4 = hard; 5 = very hard.

### FLAVOUR

1 = very poor; 2 = mediocre; 3 = good; 4 = very good; 5 = excellent.

### OVERALL OPINION

1 = very poor; 2 = mediocre; 3 = good; 4 = very good; 5 = excellent.

Table 3 shows that the assessment of the hardness and of the flavour of the samples of spaghetti according to the invention gave results wholly comparable to those of the control semolina spaghetti sample, and the assessment of the hardness and of the flavour of the spaghetti sample containing lupin flour was decidedly worse.

In particular, the spaghetti sample containing 20% of lupin isolate was found to be particularly tough upon cooking, in comparison with all of the spaghetti samples compared, and showed slight surface darkening after cooking.

Moreover, the spaghetti sample containing 15% of lupin protein concentrate showed a slightly lesser hardness after cooking than the semolina spaghetti sample, probably because of the relatively heterogeneous composition of the concentrate which also contains moderate percentages of polysaccharide components of the fibrous structures of the seeds.

All of the spaghetti samples according to the invention had characteristics in terms of consistency, stickiness, tendency to stick together/move freely on the plate, and moisture content wholly similar to those of the control semolina spaghetti sample.

## Claims

1. Pasta based on semolina enriched with vegetable proteins comprising at least one legume protein concentrate and/or isolate, **characterized in that** the at least one legume protein concentrate and/or isolate is lupin and is present in percentages of 10-20% by weight relative to the weight of the semolina.

2. Pasta according to Claim 1, in which the at least one legume protein concentrate and/or isolate is present in percentages of 14-16% by weight relative to the weight of semolina.

3. Dough for the preparation of a pasta according to any one of the preceding claims, **characterized in that** it comprises lupin protein concentrate and/or isolate in percentage of 10-20% by weight relative to the weight of semolina.

4. Use of lupin protein concentrate and/or isolate in percentage of 10-20% by weight relative to the weight of serolina in the preparation of a dough for the production of pasta.

## Patentansprüche

1. Teigwaren auf Grundlage von Weizengrieß angereichert mit Pflanzenproteinen umfassend mindestens ein Hülsenfruchtproteinkonzentrat und/oder ―isolat, **dadurch gekennzeichnet, dass** das mindestens eine Hülsenfruchtproteinkonzentrat und/oder ―isolat Lupine ist und in Prozentanteilen von 10-20 Gew.-% relativ zum Gewicht des Weizengrießes vorhanden ist.

2. Teigwaren nach Anspruch 1, in denen mindestens ein Hülsenfruchtproteinkonzentrat und/oder ―isolat in Prozentanteilen von 14-16 Gew.-% relativ zum Gewicht des Weizengrießes vorhanden ist.

3. Teig zur Herstellung von Teigwaren nach einem der vorhergehenden Ansprüche, **dadurch gekennzeichnet, dass** er Lupinenproteinkonzentrat und/oder ―isolat in Prozentanteilen von 10-20 Gew.-% relativ zum Gewicht des Weizengrießes umfasst.

4. Verwendung von Lupinenproteinkonzentrat und/oder ―isolat in Prozentanteilen von 10-20 Gew.-% relativ zum Gewicht des Weizengrießes zur Herstellung eines Teiges für die Produktion von Teigwaren.

## Revendications

1. Pâtes alimentaires à base de semoule enrichies en protéines végétales comprenant au moins un concentré et/ou un isolat de protéine légumineuse **caractérisées en ce que** le concentré et/ou l'isolat d'au moins une protéine légumineuse est du lupin et est présent dans des pourcentages de 10 à 20 % en poids par rapport au poids de la semoule.

2. Pâtes alimentaires selon la revendication 1, dans laquelle le concentré et/ou l'isolat d'au moins une protéine légumineuse est présent dans des pourcentages de 14 à 16 % en poids par rapport au poids de la semoule.

3. Pâte destinée à la préparation des pâtes alimentaires selon l'une quelconque des revendications précédentes, **caractérisée en ce qu'**elle comprend un concentré et/ou un isolat de protéine de lupin dans un pourcentage de 10 à 20 % en poids par rapport au poids de la semoule.

4. Utilisation d'un concentré et/ou d'un isolat de protéine de lupin dans un pourcentage de 10 à 20 % en poids par rapport au poids de la semoule dans la préparation d'une pâte destinée à la production de pâtes alimentaires.
